# FASCICULE DE BREVET EUROPEEN

(11) **EP 0 766 077 B1**
(45) Date de publication et mention de la délivrance du brevet: **17.12.2003**
(21) Numéro de dépôt: 96402073.9
(22) Date de dépôt: 27.09.1996
(51) Int. Cl.: G01L 5/24

(54) **Capteur d'effort pour contrôler le serrage de pièces assemblées par un goujon**
Kraftsensor zur Kontrolle des Festziehens von verschraubten Teilen
Load sensor for controlling the tightening of pieces joined by a bolt

(30) Priorité: 29.09.1995 FR 9511467
(43) Date de publication de la demande: 02.04.1997
(73) Titulaire: ELECTRICITE DE FRANCE, 75008 Paris (FR)
(72) Inventeur: Scliffet, Laurent, 77300 Fontainebleau (FR); Capion, Jean-Claude, 77670 Vernou la Celle (FR); Vignaud, Jean-Cyprien, 77430 Champagne sur Seine (FR); Nowak, Henri, 77520 Gurcy le Chatel (FR)
(74) Mandataire: Poulin, Gérard

(56) Documents cités:
- DE-B- 1 124 729
- US-A- 4 770 049
- PATENT ABSTRACTS OF JAPAN vol. 9, no. 182 (P-376) <1905> 27 Juillet 1985 & JP 60 053 828 A (IDEMITSU SEKIYU KAGAKU K.K.) 27 Mars 1985

## Description

### Domaine technique

L'invention concerne un capteur d'effort permettant de contrôler l'effort de serrage sur des pièces assemblées par un goujon, d'une façon relativement précise et peu coûteuse.

### Etat de la technique

Il existe, dans le domaine de la mécanique, de nombreux types de capteurs de force, tels que ceux présentés dans la brochure commerciale du fabriquant KISTLER S. A.

En particulier, il est souvent nécessaire de contrôler l'effort de serrage sur des assemblages vissés au moyen d'un goujon. Dans ce cas, le système le plus connu pour mesurer l'effort de serrage exercé par un goujon est la clef dynamométrique.

Cependant, une telle clef dynamométrique ne permet pas une grande précision de mesure. En outre, elle ne permet pas de tenir compte de la dispersion du serrage, c'est-à-dire de la répartition de l'effort de serrage sur les pièces assemblées.

Pour mesurer un effort de serrage, il est fréquent également d'utiliser un goujon pigé. Ce goujon pigé est, en fait, un goujon au centre duquel est placé une pige. Ainsi, alors que le goujon s'allonge sous l'effet du serrage par l'écrou, la pige conserve une longueur constante ; il est alors possible de mesurer une longueur différentielle entre la longueur de la pige et celle du goujon allongé. A partir de cette différence de longueur, on peut bien sûr déterminer la tension du goujon.

Cependant, une telle méthode basée sur l'utilisation d'un goujon pigé est, en pratique, relativement lente et peu facile à mettre en oeuvre lorsqu'on veut faire un contrôle automatique, par exemple avec un capteur de déplacement pour automatiser le serrage.

Une autre méthode pour mesurer l'effort de serrage dû à un goujon consiste à utiliser des ultrasons. Cette méthode de mesure par ultrasons consiste à déterminer la différence de temps que met une onde ultrason à faire un aller/retour dans la tige du goujon lorsque le goujon est tendu et lorsqu'il est au repos (c'est-à-dire non tendu). Cette différence de temps variant linéairement avec l'état de contrainte, on en déduit l'effort de serrage exercé sur les pièces à assembler.

Cependant, cette méthode de mesure par ultrasons présente l'inconvénient d'être très sensible aux variations de température ainsi qu'à la nature du matériau dans lequel est réalisée la tige du goujon. En outre, sa mise en oeuvre est longue, délicate et relativement coûteuse. Elle nécessite, de plus, une solide qualification de la part de l'opération.

Le document DE-A-1 124 729 décrit un dispositif de mesure des forces agissant entre deux éléments assemblés au moyen d'un boulon fileté et d'un écrou. Ce dispositif consiste en une rondelle disposée entre l'écrou et l'un des éléments à assembler ; cette rondelle comporte deux rondelles partielles entre lesquelles est placé un dispositif à cristal piézoélectrique. Deux douilles, placées entre les deux rondelles partielles, en périphérie intérieure et extérieure, sont destinées à presser les deux rondelles partielles contre le dispositif à cristal.

Or, ce dispositif est relativement coûteux à mettre en oeuvre sur chaque rondelle. De plus, le cristal piézoélectrique ne peut pas fonctionner en température.

Le document JP-A-60 053828 décrit un procédé pour mesurer l'état de serrage d'un goujon en couplant la pièce à serrer à la surface de laquelle plusieurs jauges de contrainte sont fixées, avec la tige du goujon, puis en mesurant la variation de résistance électrique dans les jauges de contrainte.

Or, ce dispositif n'est pas simple à mettre en oeuvre puisqu'il nécessite de fixer les jauges, au cas par cas, sur les pièces à assembler.

Le document US 4 770 049 décrit un capteur d'effort pour laminoirs ou banc d'étirage. Ce capteur d'effort est en forme de rondelle avec un élément en anneau à profil en oméga qui porte des jauges de contrainte et un boîtier pour protéger l'élément en anneau et les jauges de contrainte. La base du oméga est verticale et les jauges de contrainte sont au sommet du oméga.

### Exposé de l'invention

L'invention a justement pour but de remédier aux inconvénients des techniques énoncées précédemment. A cette fin, l'invention propose un capteur d'effort tel qu'exposé dans la revendication 1, il a sensiblement la forme d'une rondelle et peut être placé autour du goujon, entre l'écrou et les pièces à assembler. Les modes particuliers de réalisation de l'invention sont définis dans les revendications dépendantes 2 - 7.

De façon plus précise, l'invention concerne un capteur d'effort pour contrôler l'effort de serrage de pièces à assembler par un goujon, ce serrage étant effectué au moyen d'un écrou. Ce capteur se caractérise par le fait qu'il comporte une coquille en forme de rondelle disposée entre l'écrou et les pièces à assembler et à l'intérieur de laquelle sont disposées au moins deux jauges de déformation.

Avantageusement, la coquille comporte une demi-coquille de support ayant une paroi interne sur laquelle sont fixées les jauges de déformation et une demi-coquille de protection qui est fixée sur la demi-coquille de support pour protéger ces jauges de déformation.

Selon un mode de réalisation de l'invention, la demi-coquille de support a une section en forme de L, les jauges de déformation étant fixées sur la paroi verticale du L.

Selon l'invention, chaque jauge de déformation est connectée sur des moyens de calcul situés à l'extérieur de la coquille et qui sont aptes à déterminer une valeur moyenne de l'effort de serrage réparti sur la coquille.

Selon une variante de l'invention, les jauges de déformation sont connectées aux moyens de calcul par l'intermédiaire d'une prise électrique dont l'une des fiches est fixée latéralement sur la demi-coquille de protection.

### Brève description des dessins

La figure 1 représente schématiquement un goujon muni d'un capteur d'effort conforme à l'invention ; et
- la figure 2 représente une vue de dessus, en coupe, du capteur d'effort de la figure 1.

### Description de modes de réalisation de l'invention

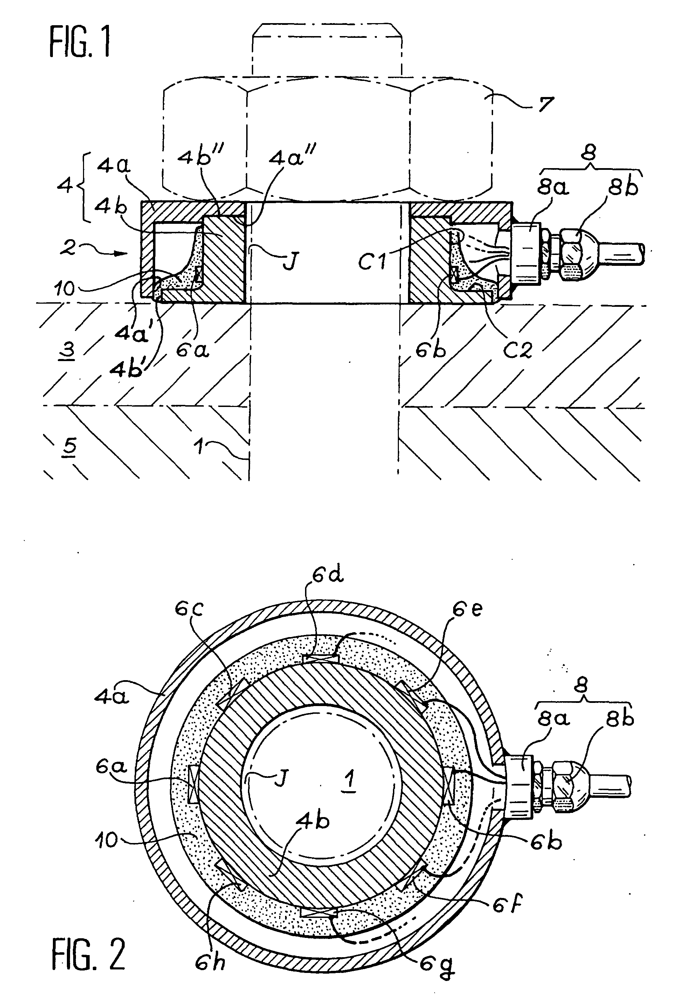

Sur la figure 1, on a représenté un goujon 1 introduit dans des pièces 3 et 5 que l'on cherche à assembler grâce à ce goujon 1. A l'une des extrémités de ce goujon 1, est vissé un écrou 7 à partir duquel la force de serrage des pièces 3 et 5 peut être réglée.

Entre la pièce 3 et l'écrou 7, est placé le capteur d'effort 2 de l'invention. Comme montré sur la figure 1, le capteur d'effort 2 a sensiblement la forme d'une rondelle, ce qui permet de l'introduire autour du goujon 1, entre l' écrou 7 et la pièce 3 comme une rondelle habituelle. Comme toute rondelle utilisée habituellement, le capteur d'effort 2 est placé autour du goujon 1 avec un jeu J.

Par contre, contrairement aux rondelles habituelles, cette "rondelle" de l'invention permet de déterminer la valeur moyenne de l'effort de serrage réparti sur la pièce 3 grâce à des jauges de déformation placées à l'intérieur de ladite rondelle.

Plus précisément, le capteur d'effort 2 comporte une coquille 4 qui comporte elle-même deux demi-coquilles 4a et 4b : une demi-coquille de support 4a et une demi-coquille de protection 4b.

Ce capteur d'effort 2 comporte, à l'intérieur de la coquille 4, des jauges de déformation qui sont fixées sur la demi-coquille de support 4a. Ces jauges de déformation sont d'un type tout à fait courant. Le nombre de jauges de déformation à placer dans la coquille 4 dépend de la taille de ces jauges. Toutefois, elles sont au moins au nombre de deux.

Sur le mode de réalisation représenté sur la figure 1, le capteur d'effort comporte huit jauges de déformation dont deux seulement sont visibles sur la figure. Ces jauges portent les références 6a et 6b.

Chacune des jauges de déformation du capteur d'effort 2 est apte à déterminer une valeur de la déformation subie par la demi-coquille de support 4b en un point de cette demi-coquille 4b.

Un moyennage analogique de l'ensemble des valeurs d'effort détectées par chacune des jauges de déformation en un point de la coquille, est réalisé sur le pont de jauges (non visible sur la figure) de façon à obtenir en sortie du capteur d'effort une valeur de déformation moyenne. On en déduit ensuite l'effort de serrage exercé par le goujon 1 sur les pièces 3 et 5.

Une demi-coquille de protection 4a est placée au-dessus de l'ensemble des jauges de façon à les protéger de tout contact avec l'écrou 7. Cette demi-coquille de protection 4a forme, avec la demi-coquille de support 4b, une sorte de "rondelle".

Selon le mode de réalisation préféré de l'invention, c'est-à-dire celui représenté sur la figure 1), la demi-coquille de support 4b a une section en forme de L. Dans ce cas, les jauges de déformation sont fixées sur la paroi verticale interne C1, de cette demi-coquille de support 4b et, de préférence, à proximité de l'angle formé par la paroi verticale C1 et le côté horizontal C2.

Selon un mode de réalisation de l'invention, les jauges de déformation 6a, 6b sont fixées sur la demi-coquille de support 4b au moyen d'une colle pouvant résister à de hautes températures (de l'ordre de 250°C, par exemple). C'est ce mode de réalisation qui est représenté sur la figure 1, sur laquelle la colle est référencée 10.

Pour coller ces jauges sur la demi-coquille de support 4b, il est possible aussi d'utiliser, dans certains cas, une colle du type céramique qui présente une bonne tenue aux rayonnements nucléaires.

Selon un autre mode de réalisation de l'invention, les jauges utilisées sont du type sans support ; de telles jauges peuvent supporter une température de 700°C.

Dans les modes de réalisation où les jauges sont fixées au moyen d'une couche de colle, l'extrémité basse 4a' de la demi-coquille de protection 4a peut également être fixée contre l'extrémité inférieure 4b' de la demi-coquille de support 4b au moyen de cette couche de colle, comme montré sur la figure 1. Au contraire, les parties supérieures 4a" et 4b" des demi-coquilles sont en contact direct (sans colle) pour une meilleure transmission des efforts.

Dans le cas contraire, les demi-coquilles 4a et 4b peuvent comporter, aux extrémités libres de leurs parois, un système d'emboîtement, par exemple de type tenon-mortaise, permettant aux deux demi-coquilles de s'emboîter pour former la coquille 4.

Selon une variante de l'invention, chaque jauge de déformation est reliée à une fiche mâle 8a fixée sur la face extérieure latérale de la demi-coquille de protection 4a du capteur d'effort 2 ; la prise femelle 8b à laquelle sont connectés les moyens de calculs vient alors s'enficher sur la pièce mâle 8a.

A titre indicatif, cette prise peut être du type push-pull à quatre broches (deux broches pour l'alimentation et deux broches pour le signal à mesurer).

Sur la figure 2, on a représenté une vue de dessus, en coupe, du capteur d'effort de l'invention.

On retrouve donc, sur cette figure 2, la plupart des éléments de la figure 1 et, en particulier, le goujon 1 entouré du capteur d'effort 2, en forme de rondelle. On voit également le jeu J entre la rondelle et le goujon.

Sur cette figure 2, on a représenté, en hâchuré, la demi-coquille de support 4b sur laquelle sont fixées huit jauges de déformation 6a, 6b, 6c, 6d, 6e, 6f, 6g et 6h entourées d'une couche de colle 10. L'ensemble de ces jauges est protégé par la demi-coquille de protection 4a.

on a représenté également sur cette figure 2, les fils de connexion des jauges 6e, 6b, 6f et 6g connectées sur la prise mâle 8a de la prise de connexion 8.

Ce capteur d'effort de l'invention peut donc être utilisé comme une rondelle classique. Il présente en outre l'avantage de supporter des conditions difficiles en température, en humité et en rayonnements. De plus, il permet une précision relativement bonne, c'est-à-dire de l'ordre de 5 %, basée sur la moyenne de plusieurs valeurs mesurées chacune par une jauge de déformation.

Par ailleurs, le coût de fabrication d'un tel capteur d'effort est relativement peu élevé puisqu'il peut être réalisé à partir des jauges classiques.

## Revendications

1. Capteur d'effort pour contrôler l'effort de serrage d'un écrou (7) sur des pièces (3, 5) à assembler au moyen d'un goujon (1), comprenant une coquille (4) en forme de rondelle placée autour du goujon (1) entre l'écrou (7) et les pièces (3, 5) à assembler, la coquille (4) étant formée de deux demi-coquilles (4a, 4b), l'une (4b) étant une demi-coquille de support et l'autre (4a) une demi-coquille de protection, la coquille (4) contenant en son sein au moins deux jauges de déformation (6a, 6b) fixées sur la demi-coquille de support (4b) et qui sont protégées d'un écrasement entre la demi-coquille de protection (4a) et la demi-coquille de support (4b), cet écrasement étant provoqué par le serrage de l'écrou, **caractérisé en ce que** la demi-coquille de support (4b) a une section en forme de L, les jauges de déformation étant alors fixées sur la paroi verticale (C1) du L.

2. Capteur d'effort selon la revendication 1, **caractérisé en ce que** les jauges de déformation (6a, 6b) sont fixées par collage.

3. Capteur d'effort selon l'une des revendications 1 ou 2, **caractérisé en ce que** la demi-coquille de protection (4a) est fixée sur la demi-coquille de support (4b) pour protéger les jauges de déformation (6a, 6b).

4. Capteur d'effort selon la revendication 3, **caractérisé en ce que** la demi-coquille (4a) de protection est fixée par collage sur la demi-coquille de support (4b).

5. Capteur d'effort selon la revendication 1, **caractérisé en ce que** les deux demi-coquilles (4a, 4b) sont emboîtées pour former la coquille.

6. Capteur d'effort selon l'une quelconque des revendications 1 à 5, **caractérisé en ce que** chaque jauge de déformation (6a, 6b) est connectée à des moyens de calcul situés à l'extérieur de la coquille et aptes à déterminer une valeur moyenne de l'effort de serrage réparti sur la coquille (6).

7. Capteur d'effort selon la revendication 6, **caractérisé en ce que** les jauges de déformation (6a, 6b) sont connectées aux moyens de calcul par l'intermédiaire d'une prise électrique (8) dont l'une des fiches (8a) est fixée latéralement sur la demi-coquille de protection (4a).

## Patentansprüche

1. Kraftsensor zur Kontrolle des Festziehens einer Schraubenmutter (7) auf Teilen (3, 5), die mittels eines Bolzens (1) zusammengebaut werden, ein Gehäuse (4) umfassend, das ringförmig den Bolzen (1) umgibt, zwischen der Schraubenmutter (7) und den zusammenzubauenden Teilen (3, 5), wobei das Gehäuse (4) durch zwei Halbschalen (4a, 4b) gebildet wird, wovon eine (4b) eine Traghalbschale ist und die andere (4a) eine Schutzhalbschale, und das Gehäuse (4) in seinem Innern wenigstens zwei Verformungsmesseinrichtungen (6a, 6b) enthält, befestigt auf der Traghalbschale (4b), die gegen ein Zusammendrücken bzw. Zerquetschen zwischen der Schutzhalbschale (4a) und der Traghalbschale (4b) geschützt sind, wobei dieses Zusammendrücken bzw. Zerquetschen durch das Festziehen der Schraubenmutter verursacht wird,
**dadurch gekennzeichnet,**
**dass** die Traghalbschale (4b) einen L-förmigen Querschnitt hat und die Verformungsmesseinrichtungen dann an der vertikalen Wand (C1) des L befestigt sind.

2. Kraftsensor nach Anspruch 1, **dadurch gekennzeichnet, dass** die Verformungsmesseinnchtungen (6a, 6b) durch Kleben befestigt werden.

3. Kraftsensor nach einem der Ansprüche 1 oder 2, **dadurch gekennzeichnet, dass** die Schutzhalbschale (4a) auf der Traghalbschale (4b) befestigt ist, um die Verformungsmesseinrichtungen (6a, 6b) zu schützen.

4. Kraftsensor nach Anspruch 3, **dadurch gekennzeichnet, dass** die Schutzhalbschale (4a) mittels Klebung auf der Traghalbschale (4b) befestigt ist.

5. Kraftsensor, nach Anspruch 1, **dadurch gekennzeichnet, dass** die beiden Halbschalen (4a, 4b) zur Bildung des Gehäuses verschachtelt bzw. ineinandergefügt sind.

6. Kraftsensor nach einem der Ansprüche 1 bis 5, **dadurch gekennzeichnet, dass** jede Verformungsmesseinrichtung (6a, 6b) mit Recheneinheiten verbunden ist, die sich außerhalb des Gehäuses befinden und fähig sind, einen auf das Gehäuse (6) verteilten mittleren Spannkraftwert zu bestimmen.

7. Kraftsensor nach Anspruch 6, **dadurch gekennzeichnet, dass** die Verformungsmesseinrichtungen (6a, 6b) mit den Recheneinrichtungen durch eine elektrische Steckverbindung (8) verbunden sind, wobei eines der Steckverbindungselemente (8a) seitlich auf der Schutzhalbschale (4a) befestigt ist.

## Claims

1. Load sensor for controlling the tightening load of a nut (7) on parts (3, 5) to be assembled by means of a stud (1), comprising a shell (4) of washer shape placed around the stud (1) between the nut (7) and the parts (3, 5) that are to be assembled, the shell (4) being formed of two half-shells (4a, 4b), one (4b) being a supporting half-shell and the other (4a) a protecting half-shell, the shell (4) containing within it at least two strain gauges (6a, 6b) fixed to the supporting half-shell (4b) and protected from crushing between the protecting half-shell (4a) and the supporting half-shell (4b), this crushing being brought about by the tightening of the nut, **characterized in that** the supporting half-shell (4b) has an L-shaped cross section, the strain gauges then being fixed on the vertical wall (C1) of the L.

2. Load sensor according to Claim 1, **characterized in that** the strain gauges (6a, 6b) are attached by bonding.

3. Load sensor according to one of Claims 1 and 2, **characterized in that** the protecting half-shell (4a) is fixed to the supporting half-shell (4b) to protect the strain gauges (6a, 6b).

4. Load sensor according to Claim 3, **characterized in that** the protecting half-shell (4a) is fixed to the supporting half-shell (4b) by bonding.

5. Load sensor according to Claim 1, **characterized in that** the two half-shells (4a, 4b) are nested together to form the shell.

6. Load cell according to any one of Claims 1 to 5, **characterized in that** each strain gauge (6a, 6b) is connected to calculation means situated outside the shell and able to determine a mean value of the tightening force distributed over the shell (6).

7. Load sensor according to Claim 6, **characterized in that** the strain gauges (6a, 6b) are connected to the calculation means by an electric plug (8) one of the pins (8a) of which is fixed laterally to the protecting half-shell (4a).
